# EUROPÄISCHE PATENTSCHRIFT

(11) **EP 0 603 611 B1**
(45) Veröffentlichungstag und Bekanntmachung des Hinweises auf die Patenterteilung: **01.04.1998**
(21) Anmeldenummer: 93119517.6
(22) Anmeldetag: 03.12.1993
(51) Int. Cl.: C08K 5/00, C08K 5/09, C08L 21/00

(54) **Mastiziermittel für Kautschuk**
Masticating agent for rubber
Agent de mastication four caoutchouc

(30) Priorität: 16.12.1992 DE 4242499
(43) Veröffentlichungstag der Anmeldung: 29.06.1994
(73) Patentinhaber: RHEIN-CHEMIE RHEINAU GmbH, 68219 Mannheim (DE)
(72) Erfinder: Steger, Lothar, Dr., D-81545 München (DE); Syrowatka, Horst, D-68782 Brühl (DE); Schütte, Walter, New Town, PA 18940 (US)
(74) Vertreter: Gremm, Joachim, Dr.

(56) Entgegenhaltungen:
- DD-A- 86 496
- FR-A- 2 177 909

## Beschreibung

Der von den Plantagen angelieferte Naturkautschuk ist im allgemeinen zu hart und nervig, als daß man ihn unmittelbar mit Kautschukchemikalien mischen und weiterverarbeiten könnte. Dasselbe gilt für hart eingestellte Synthesekautschukarten, z.B. für Mischpolymerisate aus Butadien und Styrol oder Acrylsäurenitril und andere kautschukähnliche Mischpolymerisate. Es ist daher notwendig, den Kautschuk vor dem Mischprozeß zu mastizieren, d.h. plastisch zu machen. Die Mastikation kann rein mechanisch ohne Zugabe von chemischen Hilfsmitteln durch Bearbeiten auf der Walze oder im Kneter erfolgen. Dieser Prozeß, der bei niedriger Temperatur durchgeführt werden muß, dauert jedoch im allgemeinen relativ lange. Zur besseren Ausnutzung der vorhandenen Verarbeitungskapazitaten im Betrieb und zur Einsparung von Energie setzt man daher im allgemeinen Mastiziermittel zu und mastiziert bei höheren Temperaturen.

Auf diese Weise wird ein sehr schneller und gleichmäßiger Abbau des Kautschuks erreicht.

Gebräuchliche Mastiziermittel sind unter anderem Thiophenole, die am Arylrest verschiedenartig substituiert sein können, ferner deren Disulfide und Zinksalze. Auch Nitrosoverbindungen und Hydrazinderivate sind schon als Plastiziermittel angewandt worden. Es ist bekannt, daß diese Verbindungen zwar bereits in kleinen Dosierungen sehr wirksam sind, daß andererseits jedoch gewisse Minimalkonzentrationen an Plastiziermittel hierbei nicht unterschritten werden dürfen.

Aus DE-AS 1 220 123 ist bekannt, daß sich metallhaltige 16-gliedrige cyclische Ringverbindungen, in denen 8 Kohlenstoffatome und 8 Stickstoffatome alternierend angeordnet sind und in denen jedes zweite Stickstoffatom mit den beiden benachbarten Kohlenstoffatomen über ein aus 2 Atomen bestehendes, ggf. substituiertes Brückenglied einen heterocyclischen Ring bildet und worin mindestens ein Teil der heterocyclischen Ringe 2 benachbarte Stickstoffatome enthält, besonders gut als Mastiziermittel für natürlichen oder synthetischen Kautschuk eignen. Diese Verbindungen werden im Folgenden als "Ferron" bezeichnet.

Sie werden zeckmäßig in Mengen von 0,00001 bis 0,1 %, bezogen auf Kautschuk, bei Temperaturen zwischen 80 und 180°C, vorzugsweise bei 125 bis 130°C, zur Mastikation verwendet.

Die erfindungsgemäß zu verwendenden Verbindungen lassen sich durch die nachstehenden Formeln I und II ausdrücken, in denen Me ein mindestens zweiwertiges Metallatom und die Reste R Alkyl-, Aryl- oder Cycloalkylreste, die auch paarweise gegebenenfalls substituierte carbocyclische oder heterocyclische Ringe bilden können, bedeuten.

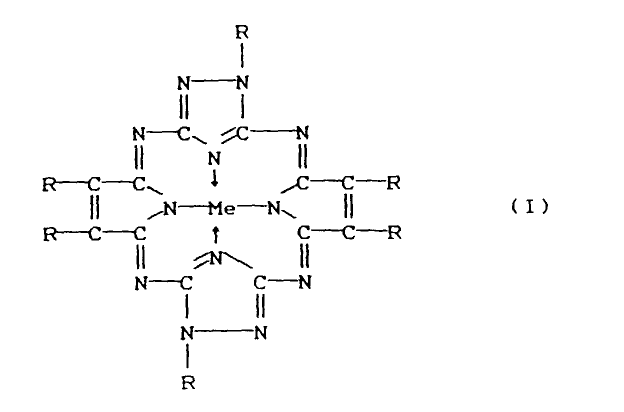

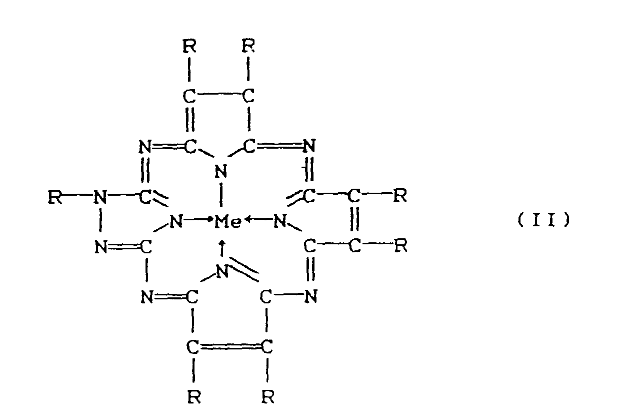

Bei diesen Verbindungen handelt es sich z.B. um Tetraazaporphine oder Hemiporphyrazine. Die Verbindungen enthalten Metalle, wie Eisen, Kobalt, Nickel, Chrom, Mangan, Zink, Aluminium oder Magnesium komplex gebunden. Die Verbindungen werden aus gegebenenfalls substituierten Aminopyrroleninen mit Guanazol [3,5-Diamino-triazol-(1,2,4)] oder substituierten Guanazolen und Metallsalzen erhalten (vgl. die deutsche Patentschrift 1 080 243 und de US-Patentschrift 2 765 308).

Ein Teil dieser Verbindungen ist so intensiv gefärbt, daß selbst bei den niedrigen, für die Mastikation erforderlichen Dosierungen die Kautschukmischung merklich und bleibend angefärbt wird. Dieser Effekt macht sich stärker bei hellem Crepe, weniger bei smoked sheets bemerkbar. Wieder andere, insbesondere die Hemiporphyrazine, färben den Kautschuk praktisch nicht an. Deshalb ist es zweckmäßig, die Konzentrationen an Mastiziermittel möglichst gering zu halten und gleichzeitig ein geeignetes anderes Plastiziermittel, z.B. Zinkpentachlorthiophenol oder Pentachlorthiophenol, zuzugeben. Man erreicht dann mit diesem Gemisch dieselbe Wirksamkeit wie bei einer höheren Konzentration des Metallkomplexes allein, während die Anfärbung des Kautschuks in diesem Falle praktisch vernachlässigt werden kann. Die bei diesem Verfahren erforderliche Menge an üblichen Plastifiziermitteln ist wesentlich geringer als bei Abwesenheit des Metallkomplexes.

Zur Herstellung von Kautschukmischungen, d.h. Gemischen aus mastifiziertem Kautschuk, die alle zur Verarbeitung und Vulkanisation erforderlichen Chemikalien, wie Füllstoffe, Stabilisatoren, Vulkanisationsmittel, Vulkanisationsbeschleuniger enthalten, waren bisher drei Schritte erforderlich.
1. Mastikation - z.B. wie oben beschrieben -
2. Vormischung - Einarbeitung der Kautschukchemikalien und Füllstoffe
3. Fertigmischen - Zufügen des Vulkanisationsmittels

Die drei Schritte müssen getrennt sein, weil die Wirkung des Mastiziermittels durch die Kautschukchemikalien beeinträchtigt und deren Verteilung behindert wird und weil das vorzeitige Zufügen des Vulkanisationsmittels eine ungewollte Vulkanisation auslösen kann.

Es besteht daher ein Bedürfnis nach einem Mastiziermittel, das einfacher anwendbar ist. Ein solches Mastiziermittel für Kautschuk besteht aus dem Umsetzungsprodukt von Talgfettsäure mit 0,1 bis 3 Gew.-% (bezogen auf Mastiziermittel) einer 16-gliedrigen, metallhaltigen Ringverbindung der Formeln I oder II, 10 bis 20 Gew.-% Zinkoxid und gegebenenfalls 0,01 bis 1 Gew.-% eines Stabilisators.

Talgfettsäuren im Sinne dieser Erfindung sind Gemische von ungesattigten und gesättigten Monocarbonsäuren mit 12 bis 18 Kohlenstoffatomen und einer Jodzahl von 30 bis 60 (vgl. Römpp Chemie-Lexikon).

Besonders bevorzugte 16-gliedrige Ringverbindungen der Formel I und II sind:

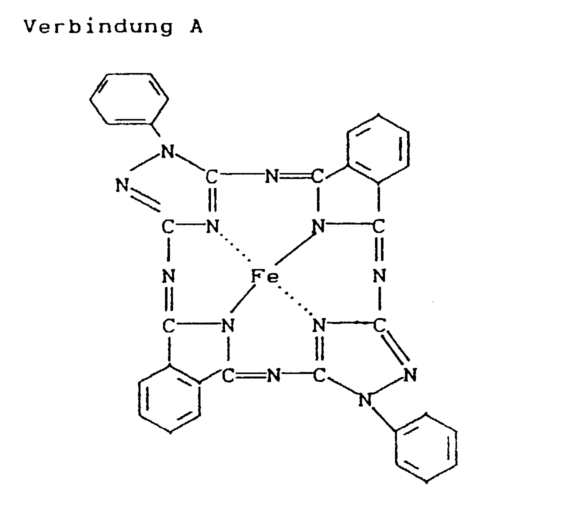

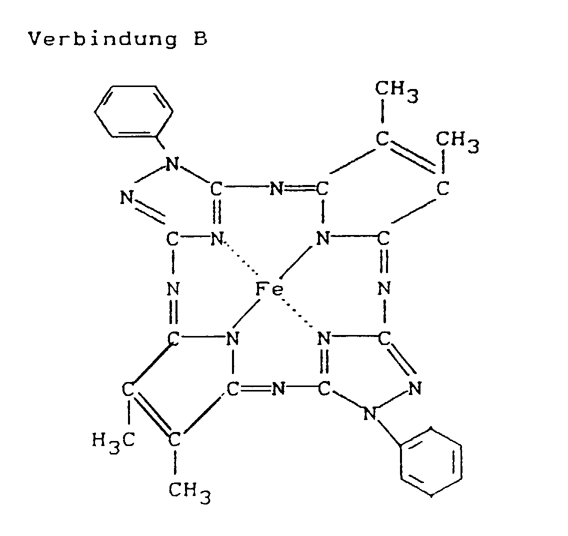

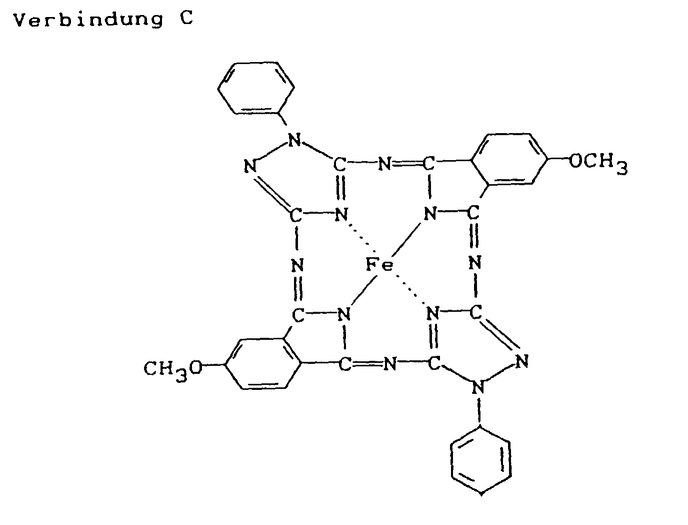

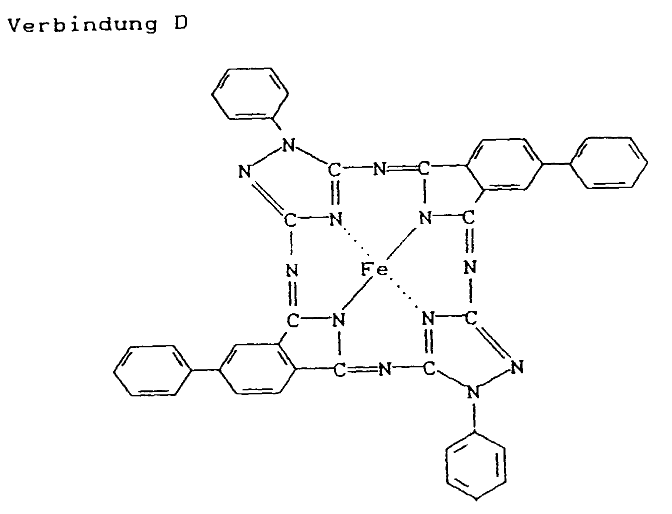

Stabilisatoren im Sinne dieser Erfindung sind mono- bzw. oligofunktionelle substituierte Phenole, die das Produkt vor schädigenden äußeren Einflüssen schützen. Besonders bevorzugt ist der Stabilisator BHT, d.h. 2,6-Di-tert.-Butyl-4-methylphenol.

Die erfindungsgemäßen Mastiziermittel können aus ihren Bestandteilen durch Zusammenschmelzen, Erkalten und Zerkleinern in sehr einfacher Weise erhalten werden. Sie können in einem Arbeitsgang zusammen mit den Kautschukchemikalien und Füllstoffen eingearbeitet werden und bewirken gleichzeitig mit der Mastikation eine besonders gute und intensive Verteilung dieser Additive. Die eigentlichen Vulkanisationsmittel müssen nachträglich zugefügt werden.

### Beispiel 1

### Ausgangsstoffe:

| |
|---|
| 150,0 g Talgfettsäure |
| (Zusammensetzung der Fettsäuren: |
| C 16 = 45 % |
| C 18' = 38 % |
| C 18'' = 8 % |
| C 18 = 5 % |
| C 14 = 2 % |
| C 12 = 1 %) |
| 1,5 g Ferron der Formel A |
| 22,0 g Zinkoxid |
| 0,5 g Stabilisator BHT (2,6-Di-tert.-Butyl-4-methylphenol) |

### Verfahren:

150 g der Talgfettsaure werden aufgeschmolzen und unter Rühren mit 1,5 g Ferron der Formel A verrührt. Der Ansatz wird auf 130°C erwärmt und 1 Stunde bei dieser Temperatur gerührt. Danach werden 22 g Zinkoxid innerhalb von 30 Minuten zugegeben und 1,5 Stunden bei 130 bis 135°C verseift. Man fügt nun 0,5 g Stabilisator BHT hinzu und läßt 15 Minuten nachrühren. Anschließend wird das Produkt auf ein Blech ausgegossen und nach dem Erkalten gebrochen.

### Produktdaten:

| | |
|---|---|
| Schmelzbereich (°C) | 99 - 104 |
| Asche (%) | 13,0 |
| Fe-Gehalt (%) | 0,037 |
| Jodzahl | 44,2 |

## Patentansprüche

1. Mastiziermittel für Kautschuk bestehend aus dem Umsetzungsprodukt von Talgfettsäure mit 0,1 bis 3 Gew.-% (bezogen auf Mastiziermittel) einer 16-gliedrigen, metallhaltigen Ringverbindung der Formeln I oder II 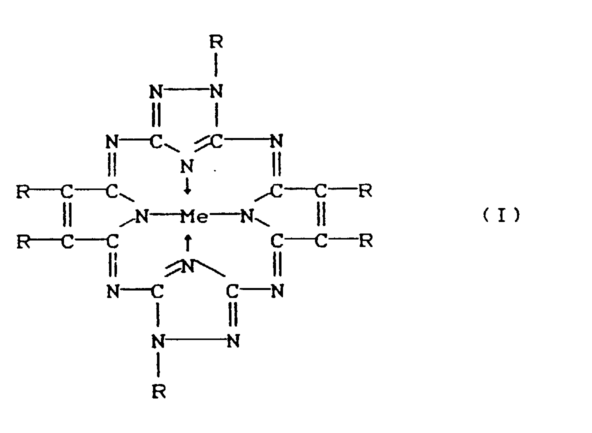 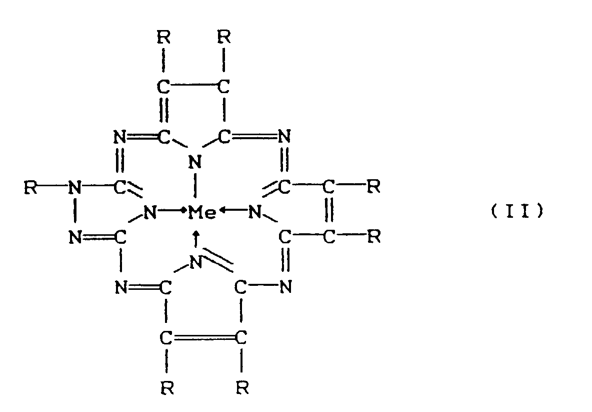 in denen Me ein mindestens zweiwertiges Metallatom und die Reste R Alkyl-, Aryl- oder Cycloalkylreste, die auch paarweise gegebenenfalls substituierte carbocyclische oder heterocyclische Ringe bilden können, bedeuten, 10 bis 20 Gew.-% Zinkoxid und gegebenenfalls 0,01 bis 1 Gew.-% eines Stabilisators.

## Claims

1. Masticating agent for rubber consisting of the reaction product of tallow fatty acid with 0.1 to 3 wt.% (with reference to masticating agent) of a 16-membered, metal-containing ring compound of the formula I or II 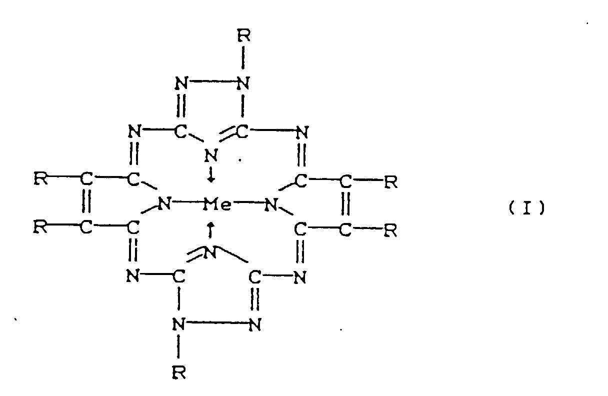 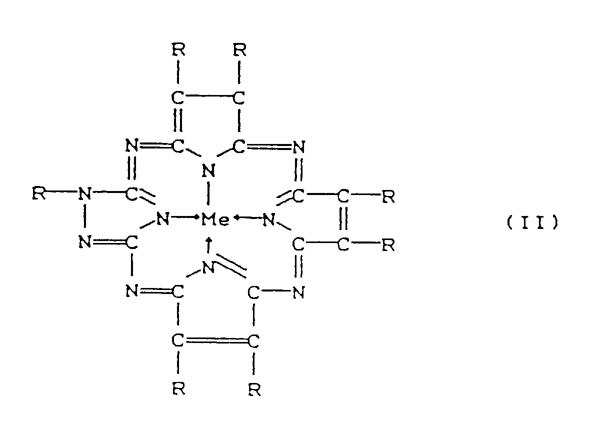 in which Me represents an at least divalent metal atom and the groups R are alkyl, aryl or cycloalkyl groups, which may also, when combined in pairs, form optionally substituted carbocyclic or heterocyclic rings, 10 to 20 wt.% of zinc oxide and optionally 0.01 to 1 wt.% of a stabiliser.

## Revendications

1. Agent de mastication pour caoutchouc consistant en le produit de réaction des acides gras de suif avec 0,1 à 3 % en poids (par rapport à l'agent de mastication) d'un composé cyclique à 16 chaînons, contenant des métaux, de formule I ou II 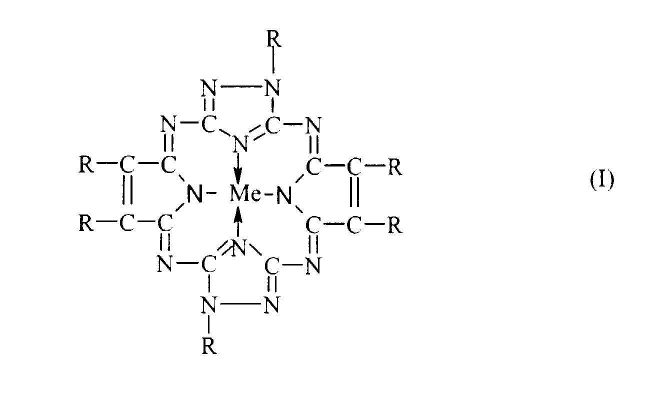 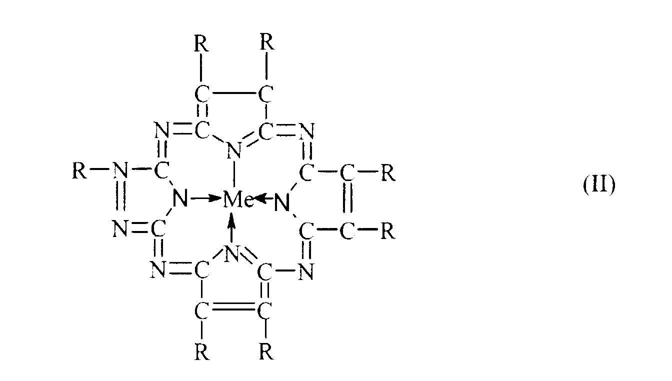 dans lesquelles Me représente un atome de métal au moins divalent et les symboles R représentent des groupes alkyle, aryle ou cycloalkyle qui peuvent également former, par deux, des noyaux carbocycliques ou hétérocycliques éventuellement substitués, 10 à 20 % en poids d'oxyde de zinc et, le cas échéant, 0,01 à 1 % en poids d'un stabilisant.
